# EUROPEAN PATENT APPLICATION

(11) **EP 4 412 360 A1**
(43) Date of publication of application: **07.08.2024**
(21) Application number: 22876836.2
(22) Date of filing: 28.09.2022
(51) Int. Cl.: H04W 72/04, H04W 72/12, H04L 1/00, H04L 5/00, H04L 27/26

(54) **METHOD AND DEVICE FOR TRANSMITTING/RECEIVING SIGNAL IN WIRELESS COMMUNICATION SYSTEM**

(30) Priority: 30.09.2021 US 202163250942 P
(71) Applicant: LG Electronics Inc., Yeongdeungpo-gu Seoul 07336 (KR)
(72) Inventor: CHOI, Seunghwan, Seoul 06772 (KR); YANG, Suckchel, Seoul 06772 (KR); KIM, Seonwook, Seoul 06772 (KR)
(74) Representative: Maikowski & Ninnemann Patentanwälte Partnerschaft mbB
(86) International application number: PCT/KR2022/014538
(87) International publication number: WO 2023/055064

(57) **Abstract**

Provided are a method and device for transmitting/receiving a signal in a wireless communication system, according to one embodiment of the present disclosure, the method comprising the steps of: receiving information indicating a demodulation-reference signal (DM-RS) port related to transmission of a physical uplink shared channel (PUSCH); and transmitting the PUSCH and DM-RS on the basis of the information. The method and the device enable an FD-OCC to be turned off on the basis of an MCS threshold and RRC signaling for FD-OCC inactivation.

## Description

### TECHNICAL FIELD

The present disclosure relates to a method and apparatus for use in a wireless communication system.

### BACKGROUND ART

Generally, a wireless communication system is developing to diversely cover a wide range to provide such a communication service as an audio communication service, a data communication service and the like. The wireless communication is a sort of a multiple access system capable of supporting communications with multiple users by sharing available system resources (e.g., bandwidth, transmit power, etc.). For example, the multiple access system may include one of code division multiple access (CDMA) system, frequency division multiple access (FDMA) system, time division multiple access (TDMA) system, orthogonal frequency division multiple access (OFDMA) system, single carrier frequency division multiple access (SC-FDMA) system, and the like.

### DISCLOSURE

### TECHNICAL PROBLEM

The object of the present disclosure is to provide a signal transmission and reception method for efficiently transmitting and receiving reference signals in a wireless communication system and apparatus therefor.

It will be appreciated by persons skilled in the art that the objects that could be achieved with the present disclosure are not limited to what has been particularly described hereinabove and the above and other objects that the present disclosure could achieve will be more clearly understood from the following detailed description.

### TECHNICAL SOLUTION

The present disclosure provides a method and apparatus for transmitting and receiving a signal in a wireless communication system.

According to an aspect of the present disclosure, a method of transmitting and receiving a signal by a user equipment (UE) in a wireless communication system includes receiving information on a demodulation-reference signal (DM-RS) port in relation to reception of a physical downlink shared channel (PDSCH), and receiving the PDSCH and the DM-RS based on the information, wherein based on that (i) radio resource control (RRC) signaling for deactivating a frequency domain orthogonal cover code (OCC) for the DM-RS port is received, and (ii) a modulation and coding scheme (MCS) for the PDSCH is greater than or equal to a threshold, an orthogonal DM-RS port belonging to the same code division multiplexing (CDM) group as the DM-RS port is not related with any other UE other than the UE.

In another aspect of the present disclosure, there are provided an apparatus, a processor, and a storage medium for performing the signal transmission and reception method.

The apparatus may include an autonomous driving vehicle communicable with at least a UE, a network, and another autonomous driving vehicle other than the communication apparatus.

The above-described aspects of the present disclosure are only some of the preferred embodiments of the present disclosure, and various embodiments reflecting the technical features of the present disclosure may be derived and understood from the following detailed description of the present disclosure by those skilled in the art.

### ADVANTAGEOUS EFFECTS

According to one embodiment of the present disclosure, when reference signals are transmitted and received between communication devices, the signals may be transmitted and received more efficiently based on operations different from those in the prior art.

It will be appreciated by persons skilled in the art that the effects that can be achieved with the present disclosure are not limited to what has been particularly described hereinabove and other advantages of the present disclosure will be more clearly understood from the following detailed description taken in conjunction with the accompanying drawings.

### DESCRIPTION OF DRAWINGS

FIG. 1 illustrates a radio frame structure.
FIG. 2 illustrates a resource grid during the duration of a slot.
FIG. 3 illustrates a self-contained slot structure.
FIG. 4 is diagrams illustrating methods for transmitting and receiving a signal according to the embodiments of the present disclosure.
FIGS. 5 to 8 illustrate devices according to an embodiment of the present disclosure.

### MODE FOR INVENTION

The following technology may be used in various wireless access systems such as code division multiple access (CDMA), frequency division multiple access (FDMA), time division multiple access (TDMA), orthogonal frequency division multiple access (OFDMA), single carrier frequency division multiple access (SC-FDMA), and so on. CDMA may be implemented as a radio technology such as universal terrestrial radio access (UTRA) or CDMA2000. TDMA may be implemented as a radio technology such as global system for mobile communications (GSM)/general packet radio service (GPRS)/enhanced data rates for GSM evolution (EDGE). OFDMA may be implemented as a radio technology such as institute of electrical and electronics engineers (IEEE) 802.11 (wireless fidelity (Wi-Fi)), IEEE 802.16 (worldwide interoperability for microwave access (WiMAX)), IEEE 802.20, evolved UTRA (E-UTRA), and so on. UTRA is a part of universal mobile telecommunications system (UMTS). 3rd generation partnership project (3GPP) long term evolution (LTE) is a part of evolved UMTS (E-UMTS) using E-UTRA, and LTE-advanced (LTE-A) is an evolution of 3GPP LTE. 3GPP new radio or new radio access technology (NR) is an evolved version of 3GPP LTE/LTE-A.

For clarity of description, the present disclosure will be described in the context of a 3GPP communication system (e.g., LTE and NR), which should not be construed as limiting the spirit of the present disclosure. LTE refers to a technology beyond 3GPP TS 36.xxx Release 8. Specifically, the LTE technology beyond 3GPP TS 36.xxx Release 10 is called LTE-A, and the LTE technology beyond 3GPP TS 36.xxx Release 13 is called LTE-A pro. 3GPP NR is the technology beyond 3GPP TS 38.xxx Release 15. LTE/NR may be referred to as a 3GPP system. "xxx" specifies a technical specification number. LTE/NR may be generically referred to as a 3GPP system. For the background technology, terminologies, abbreviations, and so on as used herein, refer to technical specifications published before the present disclosure. For example, the following documents may be referred to.

### 3GPP NR

- 38.211: Physical channels and modulation
- 38.212: Multiplexing and channel coding
- 38.213: Physical layer procedures for control
- 38.214: Physical layer procedures for data
- 38.300: NR and NG-RAN Overall Description
- 38.331: Radio Resource Control (RRC) protocol specification

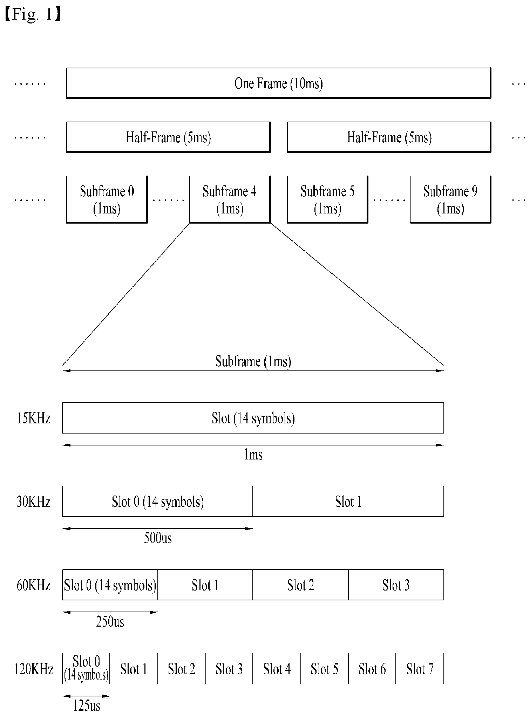

FIG. 1 illustrates a radio frame structure used for NR.

In NR, UL and DL transmissions are configured in frames. Each radio frame has a length of 10ms and is divided into two 5-ms half-frames. Each half-frame is divided into five 1-ms subframes. A subframe is divided into one or more slots, and the number of slots in a subframe depends on a subcarrier spacing (SCS). Each slot includes 12 or 14 OFDM(A) symbols according to a cyclic prefix (CP). When a normal CP is used, each slot includes 14 OFDM symbols. When an extended CP is used, each slot includes 12 OFDM symbols. A symbol may include an OFDM symbol (or a CP-OFDM symbol) and an SC-FDMA symbol (or a discrete Fourier transform-spread-OFDM (DFT-s-OFDM) symbol).

Table 1 exemplarily illustrates that the number of symbols per slot, the number of slots per frame, and the number of slots per subframe vary according to SCSs in a normal CP case.

**[Table 1]**

| SCS (15*2^u) | N^{slot}_{symb} | N^{frame,u}ₛₗₒₜ | N^{subframe,u}ₛₗₒₜ |
|---|---|---|---|
| 15KHz (u=0) | 14 | 10 | 1 |
| 30KHz (u=1) | 14 | 20 | 2 |
| 60KHz (u=2) | 14 | 40 | 4 |
| 120KHz (u=3) | 14 | 80 | 8 |
| 240KHz (u=4) | 14 | 160 | 16 |

| | | | |
|---|---|---|---|
| * N^{slot}_{symb}: number of symbols in a slot * N^{frame,u}ₛₗₒₜ: number of slots in a frame * N^{subfame,u}ₛₗₒₜ: number of slots in a subframe | | | |

Table 2 illustrates that the number of symbols per slot, the number of slots per frame, and the number of slots per subframe vary according to SCSs in an extended CP case.

**[Table 2]**

| SCS (15*2^u) | N^{slot}_{symb} | N^{frame,u}ₛₗₒₜ | N^{subframe,u}ₛₗₒₜ |
|---|---|---|---|
| 60KHz (u=2) | 12 | 40 | 4 |

In the NR system, different OFDM(A) numerologies (e.g., SCSs, CP lengths, and so on) may be configured for a plurality of cells aggregated for one UE. Accordingly, the (absolute time) duration of a time resource (e.g., a subframe, a slot, or a transmission time interval (TTI)) (for convenience, referred to as a time unit (TU)) composed of the same number of symbols may be configured differently between the aggregated cells.

In NR, various numerologies (or SCSs) may be supported to support various 5th generation (5G) services. For example, with an SCS of 15 kHz, a wide area in traditional cellular bands may be supported, while with an SCS of 30 kHz or 60 kHz, a dense urban area, a lower latency, and a wide carrier bandwidth may be supported. With an SCS of 60 kHz or higher, a bandwidth larger than 24.25 kHz may be supported to overcome phase noise.

An NR frequency band may be defined by two types of frequency ranges, FR1 and FR2. FR1 and FR2 may be configured as described in Table 3 below. FR2 may be millimeter wave (mmW).

**[Table 3]**

| Frequency Range designation | Corresponding frequency range | Subcarrier Spacing |
|---|---|---|
| FR1 | 450MHz **-** 7125MHz | 15**,** 30, 60kHz |
| FR2 | 24250MHz - 52600MHz | 60, 120, 240,kHz |

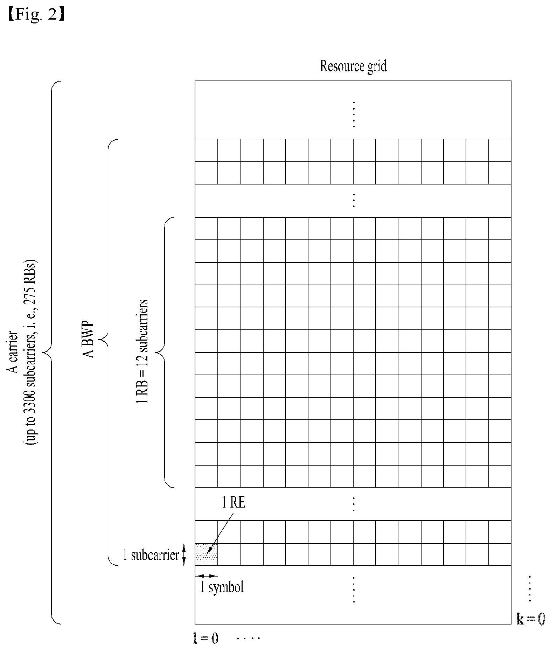

FIG. 2 illustrates a resource grid during the duration of one slot.

A slot includes a plurality of symbols in the time domain. For example, one slot includes 14 symbols in a normal CP case and 12 symbols in an extended CP case. A carrier includes a plurality of subcarriers in the frequency domain. A resource block (RB) may be defined by a plurality of (e.g., 12) consecutive subcarriers in the frequency domain. A plurality of RB interlaces (simply, interlaces) may be defined in the frequency domain. Interlace m ∈ {0, 1, ..., M-1} may be composed of (common) RBs {m, M+m, 2M+m, 3M+m,...}. M denotes the number of interlaces. A bandwidth part (BWP) may be defined by a plurality of consecutive (physical) RBs ((P)RBs) in the frequency domain and correspond to one numerology (e.g., SCS, CP length, and so on). A carrier may include up to N (e.g., 5) BWPs. Data communication may be conducted in an active BWP, and only one BWP may be activated for one UE. Each element in a resource grid may be referred to as a resource element (RE), to which one complex symbol may be mapped.

In a wireless communication system, a UE receives information from a BS in downlink (DL), and the UE transmits information to the BS in uplink (UL). The information exchanged between the BS and UE includes data and various control information, and various physical channels/signals are present depending on the type/usage of the information exchanged therebetween. A physical channel corresponds to a set of resource elements (REs) carrying information originating from higher layers. A physical signal corresponds to a set of REs used by physical layers but does not carry information originating from the higher layers. The higher layers include a medium access control (MAC) layer, a radio link control (RLC) layer, a packet data convergence protocol (PDCP) layer, a radio resource control (RRC) layer, and so on.

DL physical channels include a physical broadcast channel (PBCH), a physical downlink shared channel (PDSCH), and a physical downlink control channel (PDCCH). DL physical signals include a DL reference signal (RS), a primary synchronization signal (PSS), and a secondary synchronization signal (SSS). The DL RS includes a demodulation reference signal (DM-RS), a phase tracking reference signal (PT-RS), and a channel state information reference signal (CSI-RS). UL physical channel include a physical random access channel (PRACH), a physical uplink shared channel (PUSCH), and a physical uplink control channel (PUCCH). UL physical signals include a UL RS. The UL RS includes a DM-RS, a PT-RS, and a sounding reference signal (SRS).

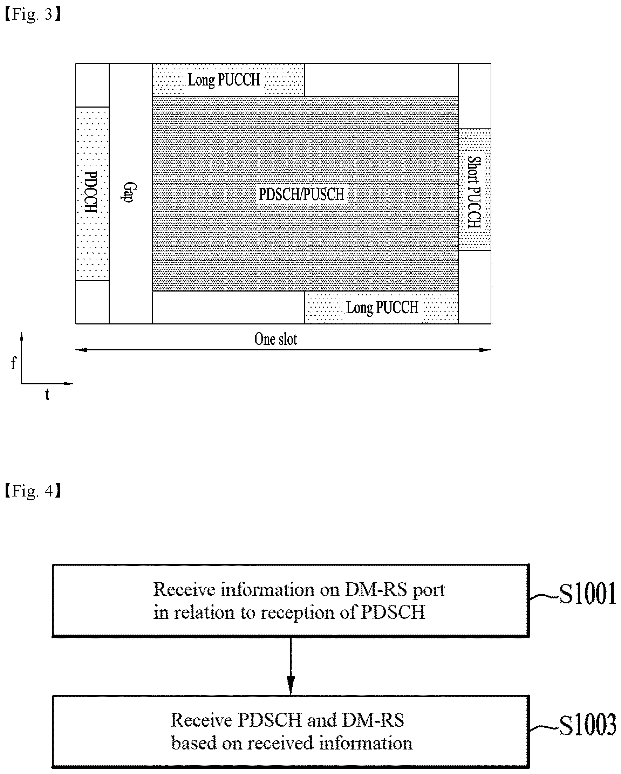

FIG. 3 illustrates a structure of a self-contained slot.

In the NR system, a frame has a self-contained structure in which a DL control channel, DL or UL data, a UL control channel, and the like may all be contained in one slot. For example, the first N symbols (hereinafter, DL control region) in the slot may be used to transmit a DL control channel, and the last M symbols (hereinafter, UL control region) in the slot may be used to transmit a UL control channel. N and M are integers greater than or equal to 0. A resource region (hereinafter, a data region) that is between the DL control region and the UL control region may be used for DL data transmission or UL data transmission. For example, the following configuration may be considered. Respective sections are listed in a temporal order.

In the present disclosure, a base station (BS) may be, for example, a gNode B (gNB).

### DL Physical Channel/Signal

### (1) PDSCH

A PDSCH carries DL data (e.g., DL-shared channel transport block (DL-SCH TB)). The TB is coded into a codeword (CW) and then transmitted after scrambling and modulation processes. The CW includes one or more code blocks (CBs). One or more CBs may be grouped into one code block group (CBG). Depending on the configuration of a cell, the PDSCH may carry up to two CWs. Scrambling and modulation may be performed for each CW, and modulation symbols generated from each CW may be mapped to one or more layers. Each layer may be mapped to resources together with a DMRS after precoding and transmitted on a corresponding antenna port. The PDSCH may be dynamically scheduled by a PDCCH (dynamic scheduling). Alternatively, the PDSCH may be semi-statically scheduled based on higher layer (e.g., RRC) signaling (and/or Layer 1 (L1) signaling (e.g., PDCCH)) (configured scheduling (CS)). Therefore, in the dynamic scheduling, PDSCH transmission is accompanied by the PDCCH, whereas in the CS, PDSCH transmission may not be accompanied by the PDCCH. The CS may include semi-persistent scheduling (SPS).

### (2) PDCCH

A PDCCH carries Downlink Control Information (DCI). For example, the PDCCH (i.e., DCI) may carry: transmission formats and resource allocation of a DL-SCH; frequency/time resource allocation information on an uplink shared channel (UL-SCH); paging information on a paging channel (PCH); system information on a DL-SCH; time/frequency resource allocation information on a higher layer control message such as a random access response (RAR) transmitted over a PDSCH; transmit power control commands; and information on activation/deactivation of SPS/CS. Various DCI formats may be provided depending on information in DCI.

Table 4 shows DCI formats transmitted over the PDCCH.

**[Table 4]**

| DCI format | Usage |
|---|---|
| 0_0 | Scheduling of PUSCH in one cell. |
| 0_1 | Scheduling of one or multiple PUSCH in one cell, or indicating downlink feedback information for configured grant PUSCH (CG-DFI) |
| 1_0 | Scheduling of PDSCH in one cell |
| 1_1 | Scheduling of PDSCH in one cell, and/or triggering one shot HARQ-ACK codebook feedback |
| 2_0 | Notifying a group of UEs of the slot format, available RB sets, COT duration and search space set group switching |
| 2_1 | Notifying a group of UEs of the PRB(s) and OFDM symbol(s) where UE may assume no transmission is intended for the UE |
| 2_2 | Transmission of TPC commands for PUCCH and PUSCH |
| 2_3 | Transmission of a group of TPC commands for SRS transmissions by one or more UEs |

DCI format 0_0 may be used to schedule a TB-based (or TB-level) PUSCH, and DCI format 0_1 may be used to schedule a TB-based (or TB-level) PUSCH or a CBG-based (or CBG-level) PUSCH. DCI format 1_0 may be used to schedule a TB-based (or TB-level) PDSCH, and DCI format 1_1 may be used to schedule a TB-based (or TB-level) PDSCH or a CBG-based (or CBG-level) PDSCH (DL grant DCI). DCI format 0_0/0_1 may be referred to as UL grant DCI or UL scheduling information, and DCI format 1_0/1_1 may be referred to as DL grant DCI or UL scheduling information. DCI format 2_0 may be used to provide dynamic slot format information (e.g., dynamic SFI) to the UE, and DCI format 2_1 may be used to provide downlink pre-emption information to the UE. UEs defined as one group may be provided with DCI format 2_0 and/or DCI format 2_1 over a group common PDCCH, which is a PDCCH defined for a group of UEs.

The PDCCH/DCI may include a cyclic redundancy check (CRC), and the CRC may be masked/scrambled with various identifiers (e.g., radio network temporary identifier (RNTI)) according to the owner or purpose of the PDCCH. For example, if the PDCCH is for a specific UE, the CRC may be masked with a cell-RNTI (C-RNTI). If the PDCCH relates to paging, the CRC may be masked with a paging-RNTI (P-RNTI). If the PDCCH relates to system information (e.g., system information block (SIB)), the CRC may be masked with a system information RNTI (SI-RNTI). If the PDCCH relates to a random access response, the CRC may be masked with a random access-RNTI (RA-RNTI).

Table 5 shows the usage of the PDCCH and transport channels according to the type of RNTI. Here, the transport channel means a transport channel related to data carried by a PDSCH/PUSCH scheduled by the PDCCH.

**[Table 5]**

| RNTI | Usage | Transport Channel |
|---|---|---|
| P-RNTI | Paging and System Information change notification | PCH(Paging Channel) |
| SI-RNTI | Broadcast of System Information | DL-SCH |
| RA-RNTI | Random Access Response | DL-SCH |
| Temporary C-RNTI | Contention Resolution (when no valid C-RNTI is available) | DL-SCH |
| Temporary C-RNTI | Msg3 transmission | UL-SCH |
| C-RNTI, MCS(Modulation and Coding Scheme)-C-RNTI | Dynamically scheduled unicast transmission | UL-SCH |
| C-RNTI | Dynamically scheduled unicast transmission | DL-SCH |
| MCS-C-RNTI | Dynamically scheduled unicast transmission | DL-SCH |
| C-RNTI | Triggering of PDCCH ordered random access | N/A |
| CS(Configued Scheduling)-RNTI | Configured scheduled unicast transmission (activation, reactivation and retransmission) | DL-SCH, UL-SCH |
| CS-RNTI | Configured scheduled unicast transmission (deactivation) | N/A |
| TPC(Transmit Power Control)-PUCCH-RNTI | PUCCH power control | N/A |
| TPC-PUSCH-RNTI | PUSCH power control | N/A |
| TPC-SRS-RNTI | SRS trigger and power control | N/A |
| INT(Interruption)-RNTI | Indication pre-emption in DL | N/A |
| SFI(Slot Format Indication)-RNTI | Slot Format Indication on the given cell | N/A |
| SP(Semi-persistent)-CSI(Channel State Information)-RNTI | Activation of Semi-persistent CSI reporting on PUSCH | N/A |

For the PDCCH, a fixed modulation scheme may be used (e.g., quadrature phase shift keying (QPSK)). One PDCCH may include 1, 2, 4, 8, or 16 control channel elements (CCEs) depending on the aggregation level (AL). One CCE may include 6 resource element groups (REGs), and one REG may be defined by one OFDMA symbol and one (P)RB.

The PDCCH may be transmitted in a control resource set (CORESET). The CORESET corresponds to a set of physical resources/parameters used to carry the PDCCH/DCI within a BWP. For example, the CORESET may include a set of REGs with a given numerology (e.g., SCS, CP length, etc.). The CORESET may be configured by system information (e.g., MIB) or UE-specific higher layer (e.g., RRC) signaling. For example, the following parameters/information may be used to configure the CORESET. One UE may be configured with one or more CORESETs, and a plurality of CORESETs may overlap in the time/frequency domain.
- controlResourceSetId: this parameter/information indicates the identifier (ID) of the CORESET.
- frequencyDomainResources: this parameter/information indicates frequency-domain resources of the CORESET. The frequency-domain resources may be indicated by a bitmap, and each bit corresponds to an RB group (= 6 consecutive RBs). For example, the most significant bit (MSB) of the bitmap corresponds to the first RB group in the BWP. An RB group corresponding to a bit with a value of 1 may be allocated as a frequency-domain resource of the CORESET.
- duration: this parameter/information indicates time-domain resources of the CORESET. The parameter/information duration may indicate the number of consecutive OFDMA symbols included in the CORESET. For example, duration has a value of 1-3.
- cce-REG-MappingType: this parameter/information indicates a CCE-to-REG mapping type. An interleaved type and a non-interleaved type may be supported.
- precoderGranularity: this parameter/information indicates a precoder granularity in the frequency domain.
- tci-StatesPDCCH: this parameter/information indicates information (e.g., TCI-StateID) on a transmission configuration indication (TCI) state for the PDCCH. The TCI state may be used to provide a quasi-co-location (QCL) relationship between DL RS(s) in an RS set (TCI-state) and a PDCCH DMRS port.
- tci-PresentInDCI: this parameter/information indicates whether a TCI field is included in DCI.
- pdcch-DMRS-ScramblingID: this parameter/information indicates information used for initialization of a PDCCH DMRS scrambling sequence.

For PDCCH reception, the UE may monitor (e.g., blind decoding) a set of PDCCH candidates in the CORESET. The PDCCH candidate may mean CCE(s) monitored by the UE for PDCCH reception/detection. PDCCH monitoring may be performed in one or more CORESETs in an active DL BWP on each active cell in which the PDCCH monitoring is configured. The set of PDCCH candidates monitored by the UE may be defined as a PDCCH search space (SS) set. The SS set may be classified into a common search space (CSS) set or a UE-specific search space (USS) set.

Table 6 shows PDCCH search spaces.

**[Table 6]**

| Search Space | Type | RNTI | Use Case |
|---|---|---|---|
| Type0-PDCCH | Common | SI-RNII on a primary cell | Broadcast of System Information |
| Type0A-PDCCH | Common | SI-RNTI on a primary cell | Broadcast of System Information |
| Type1-PDCCH | Common | RA-RNTI or TC-RNTI on a primary cell | Msg2, Msg4 in RACH |
| Type2-PDCCH | Common | P-RNTI on a primary cell | Paging System Information change notification |
| Type3-PDCCH | Common | INT-RNTI, SFI-RNTI, TPC-PUSCH-RNTL TPC-PUCCH-RNTI, TPC-SRS-RNTI, C-RNTI, MCS-C-RNTI or CS-RNTI | Group signaling |
| UE Specific | UE Specific | C-RNTI, MCS-C-RNTI or CS-RNTI | UE signaling (e.g., PDSCH/PUSCH) |

The SS set may be configured by system information (e.g., MIB) or UE-specific higher layer (e.g., RRC) signaling. S (e.g., 10) SS sets or less may be configured in each DL BWP of a serving cell. For example, the following parameters/information may be provided for each SS set. Each SS set may be associated with one CORESET, and each CORESET configuration may be associated with one or more SS sets.
- searchSpaceId: this parameter/information indicates the ID of the SS set.
- controlResourceSetId: this parameter/information indicates the CORESET associated with the SS set.
- monitoringSlotPeriodicityAndOffset: this parameter/information indicates a PDCCH monitoring periodicity (in a unit of slot) and a PDCCH monitoring offset (in a unit of slot)
- monitoringSymbolsWithinSlot: this parameter/information indicates first OFDMA symbol(s) for PDCCH monitoring in a slot in which the PDCCH monitoring is configured. The first OFDMA symbol(s) are indicated by a bitmap, and each bit corresponds to each OFDMA symbol in the slot. The MSB of the bitmap corresponds to the first OFDM symbol in the slot. OFDMA symbol(s) corresponding to bit(s) with a value of 1 corresponds to the first symbol(s) in the CORESET in the slot.
- nrofCandidates: this parameter/information indicates the number of PDCCH candidates (e.g., one of 0, 1, 2, 3, 4, 5, 6, and 8) for each AL (where AL={1, 2, 4, 8, 16}).
- searchSpaceType: this parameter/information indicates whether the SS type is the CSS or USS.
- DCI format: this parameter/information indicates the DCI format of a PDCCH candidate.

The UE may monitor PDCCH candidates in one or more SS sets in a slot according to the configuration of the CORESET/SS set. An occasion (e.g., time/frequency resource) to monitor PDCCH candidates is defined as a PDCCH (monitoring) occasion. One or more PDCCH (monitoring) occasions may be configured within a slot.

### 1. Reference signal in high frequency band

The above contents are applicable in combination with methods proposed in the present disclosure, which will be described later. Alternatively, the contents may clarify the technical features of the methods proposed in the present disclosure.

In addition, the following methods may be equally applied to the above-described NR system (licensed bands) or shared spectrum. Thus, it is obvious that the terms, expressions, and structures in this document may be modified to be suitable for the system in order to implement the technical idea of the present disclosure in the corresponding system.

The NR system supports various numerologies (or SCSs) to provide various 5G services. For example, the NR system may support a wide area in conventional cellular bands with an SCS of 15 kHz and support a dense urban area and a wide carrier bandwidth with lower latency with an SCS of 30/60 kHz. For an SCS above 60 kHz, NR may support a bandwidth of 24.25 GHz or higher. According to Release 16, NR frequency bands are divided into two frequency ranges (FR1 and FR2), which may be configured as shown in Table 3. In addition, discussions are ongoing to support future NR systems operating above frequency bands defined in FR1/FR2 (for example, 52.6 GHz to 71 GHz).

Frequency bands above FR1 and FR2 (e.g., bands from 52.6 GHz to 114.25 GHz, and more particularly, bands from 52.6 GHz to 71 GHz) may be referred to as FR2-2. The waveforms, SCSs, CP lengths, timings, etc. defined for FR1 and FR2 in the current NR system may not be applied to FR2-2.

An NR system uses a DMRS signal for a control channel and a data channel in order to perform coherent demodulation. The DMRS is inserted into resources to which the control/data channel is allocated and is used for channel estimation for coherent demodulation. Fixed patterns of the DMRS are defined depending on the control/data channel or a used waveform. In an NR operation, a network may configure an adjacent DM-RS interval on a frequency axis to be less than a coherence bandwidth of a channel by selecting one of predetermined DM-RS patterns. Therethrough, stable channel estimation at a receiving end may be possible.

In an NR system operating in a frequency band above FR2 (e.g., FR2-2 band), an impact of phase noise may be relatively large, and new numerology may be introduced to compensate for this. In this case, for example, an SCS may be greater than 240 kHz. For example, an SCS may be 480 kHz or 960 kHz. As a result, when the DM-RS pattern defined in the existing Rel-15/16 is used as is, a gap between adjacent DM-RSs to the frequency axis may be larger than a coherence bandwidth, and thus stable channel estimation may be difficult.

In particular, DMRS signals and/or ports that are CDMed using an orthogonal code in the frequency domain as DMRS signals and/or ports assigned to the same subcarrier may cause performance degradation when an orthogonal cover code (OCC) is decoupled before channel estimation at a receiving end (e.g., UE). DMRS signals/ports that are CDMed using an orthogonal code in the frequency domain may be, for example, DMRS ports that use frequency domain orthogonal cover code (FD-OCC) from among DMRS ports belonging to the same CDM group. For this reason, there may be a need for a method of configuring FD-OCC not to be used for DMRS ports belonging to the same CDM group.

DFT-s-OFDM mode may be used for NR uplink, and in this case, a PTRS pattern may be configured as Ng PTRS groups and Ns PTRS samples. The number of PTRS samples inserted into one DFT-s-OFDM is determined as Ng * Ns, and a DFT-s-OFDM symbol length is divided into Ng sub-regions. One PTRS group is inserted into each sub-region. For each PTRS group, a PTRS signal is used in Ns consecutive samples. That is, Ng=Number of PT-RS groups in a DFT-s-OFDM and Ns = Number of samples per PT-RS group may be defined. PTRS patterns supported in NR Rel-15/16, i.e., a combination of (Ng, Ns) may include (2,2), (2,4), (4,2), (4,4), (8,4). One PTRS pattern may be configured according to RB allocation. For a high frequency band above 52.6 GHz, additional patterns in addition to five PTRS patterns above may be considered. For example, patterns such as (16,2) or (16,4) may be used as a combination of (Ng,Ns). A method of indicating these additional PTRS patterns to a UE may be needed. The existing five PTRS patterns are selected according to an RB allocation size. The additional PTRS pattern may be configured differently depending on an SCS or a configured MCS. In this situation, an appropriate method of indicating these additional PTRS patterns to a UE may be needed.

Hereinafter, an improvement method related to DMRS patterns/configuration and PTRS patterns/configuration that are to be newly introduced in an NR operation in a high frequency (e.g., above 52.6 GHz)/broadband is proposed.

### 1-1) DM-RS FD-OCC off indication

This section proposes a method to indicate that FD-OCC is not used through a method such as RRC or DCI for DMRS ports that are multiplexed through OCC (hereinafter, FD-OCC) in the frequency domain from among DMRS ports multiplexed in the same CDM group. The expression "FD-OCC is not used" means that, in a UE operation, a UE operates assuming that FD-OCC is not applied to the indicated DMRS port (or the indicated DMRS port and another port with FD-OCC in the same CDM group as the indicated DMRS port). Alternatively, this UE operation may be represented as 'Support a configuration of DMRS where the UE is able to assume that FD-OCC is not applied. "FD-OCC is not applied" refers to the UE may assume that a set of remaining orthogonal antenna ports are not associated with the PDSCH to another UE, wherein the set of remaining orthogonal antenna ports are within the same CDM group and have different FD-OCC'. In the specification described below, the UE operation may be simply expressed as FD-OCC off or FD-OCC off indication.

The DMRS port indication may be made through an 'antenna port' field of DCI, and through each value of the antenna port field, the UE may know a scheduled/configured/indicated DMRS port. A mapping relationship between an antenna port field value and a DMRS port indicated therethrough is defined in TS 38.212. For example, for DL DMRS type 1 and single-symbol front loaded DMRS, Table 7 may be used. Table 7 corresponds to table 7.3.1.2.2-1 in the 3GPP TS 38.212 document. An antenna port value may be obtained by adding 1000 to a DMRS port value in Table 7. In Table 7, dmrs-Type=1, maxLength=1.

**[Table 7]**

| One Codeword: | | |
|---|---|---|
| Codeword 0 enabled, | | |
| Codeword 1 disabled | | |
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12-15 | Reserved | Reserved |

As seen from Table 7 as an example, a DMRS port is indicated through an antenna port field of DCI. However, OCC information between DMRS ports is not separately indicated. This is because the UE assumes that FD-OCC or TD-OCC is basically applied to DMRS ports within the same CDM group. Exceptionally, indication for some DMRS ports may indicate presence or absence of multiplexing. However, when a high frequency band above 52.6 GHz or a high SCS (e.g., 960 kHz) is configured, FD-OCC off may be necessary. For FD-OCC off, a method to explicitly indicate FD-OCC off may be needed.

### 1-1)-(1) DMRS port configuration requiring FD-OCC off indication

The (antenna port field and) DMRS port indication supported by Rel-15/16 NR defines an antenna port field of DCI format 1_1 or DCI format 1_2 and mapping between DMRS ports indicated therethrough through the following tables depending on a DMRS type, the number of front-loaded (FL) DMRS symbols, and whether there are multiple TRPs.

Hereinafter, a method of specifying a case in which FD-OCC off indication is required is described for each table defined in 3GPP TS 38.212.

**[Table 8]**

| One Codeword: | | |
|---|---|---|
| Codeword 0 enabled, | | |
| Codeword 1 disabled | | |
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 2 | 0,2,3 |
| 13-15 | Reserved | Reserved |

Table 8 corresponds to Table 7.3.1.2.2-1 in the 3GPP TS 38.212 document. In Table 8, Antenna port(s) (1000 + DMRS port), dmrs-Type=1, maxLength=1. In Table 8, when the number of CDM groups is 1, indication for DMRS port 1000 requires an FD-OCC off indication. For example, a UE assigned DMRS port 1000 through an antenna port field value (value in Table 8) of 0 may operate assuming that DMRS port 1001 in an FD-OCC relationship within the same CDM group as DMRS port 1000 is not assigned to a different layer or UE.

Like an antenna port field value of 3 in Table 8, when the number of CDM groups is 2, FD-OCC off indication is also required for indication for DMRS port 1000. As shown in an antenna port field value 5 in Table 8, when the number of CDM groups is 2, FD-OCC indication is also required for indication to DMRS port 1002.

Like an antenna port field value of 11 in Table 8, when the number of CDM groups is 2, FD-OCC off indication is also required for indication for DMRS ports 1000 and 1002. As a UE operation for FD-OCC off indication, the UE may operate assuming that (indicated) port 1000 and (non-indicated) port 1001 are FD-OCC off and (indicated) port 1002 and (non-indicated) port 1003 is FD-OCC off.

Like an antenna port field value of 9 in Table 8, when the number of CDM groups is 2, FD-OCC off indication is also required for indication for DMRS ports 1000, 1001, 1002. As a UE operation for this, the UE may operate assuming that (indicated) port 1000 and port 1001 are multiplexed with FD-OCC, and (indicated) port 1002 and (non-indicated) port 1003 are FD-OCC off.

**[Table 9]**

| | |
|---|---|
| For DM-RS configuration type 1, | |
| | - if a UE is scheduled with one codeword and assigned with the antenna port mapping with indices of {2, 9, 10, 11 or 30} in Table 7.3.1.2.2-1 and Table 7.3.1.2.2-2 of Clause 7.3.1.2 of [5, TS 38.212], or |
| | - if a UE is scheduled with one codeword and assigned with the antenna port mapping with indices of {2, 9, 10, 11 or 12} in Table 7.3.1.2.2-1A and {2, 9, 10, 11, 30 or 31} in Table 7.3.1.2.2-2A of Clause 7.3.1.2 of [5, TS 38.212], or |
| | - if a UE is scheduled with two codewords, |
| the UE may assume that all the remaining orthogonal antenna ports are not associated with transmission of PDSCH to another UE. | |

Table 9 is part of the 3GPP TS 38.214 document, and for antenna port values 9 and 11 in Table 8, multiplexing between an already indicated DMRS port and other DMRS ports is limited. Therefore, an additional FD-OCC off indication method may not be needed for antenna port values 9 and 11 in Table 8. In other tables described below, when multiplexing restrictions are specified as the related art, an FD-OCC off indication method may not be added.

As simple expression, in Table 8, when an antenna port field value for Rank-1 transmission is 0, 3, and/or 5, an additional indication for FD-OCC off may be required.

Table 10 corresponds to Table 7.3.1.2.2-1A in the 3GPP TS 38.212 document. Table 10, Antenna port(s) (1000 + DMRS port), dmrs-Type=1, maxLength=1. In Table 10, when an antenna port field value for rank-1 transmission is 0, 3, and/or 5, an additional indication for FD-OCC off may be required.

**[Table 10]**

| One Codeword: | | |
|---|---|---|
| Codeword 0 enabled, | | |
| Codeword 1 disabled | | |
| Value | Number of DMRS CDM group(s) without data | DMRS port(s) |
| 0 | 1 | 0 |
| 1 | 1 | 1 |
| 2 | 1 | 0,1 |
| 3 | 2 | 0 |
| 4 | 2 | 1 |
| 5 | 2 | 2 |
| 6 | 2 | 3 |
| 7 | 2 | 0,1 |
| 8 | 2 | 2,3 |
| 9 | 2 | 0-2 |
| 10 | 2 | 0-3 |
| 11 | 2 | 0,2 |
| 12 | 2 | 0,2,3 |
| 13-15 | Reserved | Reserved |

Table 11 corresponds to Table 7.3.1.2.2-2 in the 3GPP TS 38.212 document. Table 12 corresponds to Table 7.3.1.2.2-2A in the 3GPP TS 38.212 document. In Table 11, Antenna port(s) (1000 + DMRS port), dmrs-Type=1, maxLength=2. In Table 11, Antenna port(s) (1000 + DMRS port), dmrs-Type=1, maxLength=2. In Table 11, when antenna port field values for rank-1 transmission are 0, 3, 5, 12, 14, 16, and/or 18, and antenna port field values for rank-3 transmission are 26 and/or 27, additional indications for FD-OCC off may be required. The same is in Table 12.

**[Table 11]**

| One Codeword: | | | | Two Codewords: | | | |
|---|---|---|---|---|---|---|---|
| Codeword 0 enabled, | | | | Codeword 0 enabled, | | | |
| Codeword 1 disabled | | | | Codeword 1 enabled | | | |
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4-31 | reserved | reserved | reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | Reserved | Reserved | Reserved | | | | |

**[Table 12]**

| One Codeword: | | | | Two Codewords: | | | |
|---|---|---|---|---|---|---|---|
| Codeword 0 enabled, | | | | Codeword 0 enabled, | | | |
| Codeword 1 disabled | | | | Codeword 1 enabled | | | |
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 2 | 0-4 | 2 |
| 1 | 1 | 1 | 1 | 1 | 2 | 0,1,2,3,4,6 | 2 |
| 2 | 1 | 0,1 | 1 | 2 | 2 | 0,1,2,3,4,5,6 | 2 |
| 3 | 2 | 0 | 1 | 3 | 2 | 0,1,2,3,4,5,6,7 | 2 |
| 4 | 2 | 1 | 1 | 4-31 | reserved | reserved | reserved |
| 5 | 2 | 2 | 1 | | | | |
| 6 | 2 | 3 | 1 | | | | |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 2 | 0,2 | 1 | | | | |
| 12 | 2 | 0 | 2 | | | | |
| 13 | 2 | 1 | 2 | | | | |
| 14 | 2 | 2 | 2 | | | | |
| 15 | 2 | 3 | 2 | | | | |
| 16 | 2 | 4 | 2 | | | | |
| 17 | 2 | 5 | 2 | | | | |
| 18 | 2 | 6 | 2 | | | | |
| 19 | 2 | 7 | 2 | | | | |
| 20 | 2 | 0,1 | 2 | | | | |
| 21 | 2 | 2,3 | 2 | | | | |
| 22 | 2 | 4,5 | 2 | | | | |
| 23 | 2 | 6,7 | 2 | | | | |
| 24 | 2 | 0,4 | 2 | | | | |
| 25 | 2 | 2,6 | 2 | | | | |
| 26 | 2 | 0,1,4 | 2 | | | | |
| 27 | 2 | 2,3,6 | 2 | | | | |
| 28 | 2 | 0,1,4,5 | 2 | | | | |
| 29 | 2 | 2,3,6,7 | 2 | | | | |
| 30 | 2 | 0,2,4,6 | 2 | | | | |
| 31 | 2 | 0,2,3 | 1 | | | | |

Table 13 corresponds to Table 7.3.1.2.2-3 in the 3GPP TS 38.212 document. Table 14 corresponds to Table 7.3.1.2.2-3A in the 3GPP TS 38.212 document. In Table 13, Antenna port(s) (1000 + DMRS port), dmrs-Type=2, maxLength=1. In Table 14, Antenna port(s) (1000 + DMRS port), dmrs-Type=2, maxLength=1. In Table 13, when antenna port field values for rank-1 transmission are 0, 3, 5, 11, 13, and/or 15, and antenna port field values for rank-3 transmission are 9, 20, and/or 21, additional indications for FD-OCC off may be required. In DMRS ports {1002, 1004, 1005} or DMRS ports {1002, 1002, 1004} that are DMRS configuration that is not supported in the rel-15/16, FD-OCC off indication needs to be supported to be added. The same is in Table 14.

**[Table 13]**

| One codeword: | | | Two codewords: | | |
|---|---|---|---|---|---|
| Codeword 0 enabled, | | | Codeword 0 enabled, | | |
| Codeword 1 disabled | | | Codeword 1 enabled | | |
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2-31 | reserved | reserved |
| 3 | 2 | 0 | | | |
| 4 | 2 | 1 | | | |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24-31 | Reserved | Reserved | | | |

**[Table 14]**

| One codeword: | | | Two codewords: | | |
|---|---|---|---|---|---|
| Codeword 0 enabled, | | | Codeword 0 enabled, | | |
| Codeword 1 disabled | | | Codeword 1 enabled | | |
| Value | Number of DMRS CDM group(s) without data | DMRS port(s) | Value | Number of DMRS CDM group(s) without data | DMRS port(s) |
| 0 | 1 | 0 | 0 | 3 | 0-4 |
| 1 | 1 | 1 | 1 | 3 | 0-5 |
| 2 | 1 | 0,1 | 2-31 | reserved | reserved |
| 3 | 2 | 0 | | | |
| 4 | 2 | 1 | | | |
| 5 | 2 | 2 | | | |
| 6 | 2 | 3 | | | |
| 7 | 2 | 0,1 | | | |
| 8 | 2 | 2,3 | | | |
| 9 | 2 | 0-2 | | | |
| 10 | 2 | 0-3 | | | |
| 11 | 3 | 0 | | | |
| 12 | 3 | 1 | | | |
| 13 | 3 | 2 | | | |
| 14 | 3 | 3 | | | |
| 15 | 3 | 4 | | | |
| 16 | 3 | 5 | | | |
| 17 | 3 | 0,1 | | | |
| 18 | 3 | 2,3 | | | |
| 19 | 3 | 4,5 | | | |
| 20 | 3 | 0-2 | | | |
| 21 | 3 | 3-5 | | | |
| 22 | 3 | 0-3 | | | |
| 23 | 2 | 0,2 | | | |
| 24 | 2 | 0,2,3 | | | |
| 25-31 | Reserved | Reserved | | | |

Table 15 corresponds to Table 7.3.1.2.2-4 in the 3GPP TS 38.212 document. Table 16 corresponds to Table 7.3.1.2.2-4A in the 3GPP TS 38.212 document. In Table 15, Antenna port(s) (1000 + DMRS port), dmrs-Type=2, maxLength=2. In Table 16, Antenna port(s) (1000 + DMRS port), dmrs-Type=2, maxLength=2. In Table 15, when an antenna port field value for rank-1 transmission is 0, 3, 5, 11, 13, 15, 24, 26, 28, 30, 32, 34, 48, and/or 50, and an antenna port field value for rank- 3 transmission is 9, 20, 21, 42, 43 and/or 44, an additional indication for FD-OCC off may be required. The same is in Table 16.

**[Table 15]**

| One codeword: | | | | Two Codewords: | | | |
|---|---|---|---|---|---|---|---|
| Codeword 0 enabled, | | | | Codeword 0 enabled, | | | |
| Codeword 1 disabled | | | | Codeword 1 enabled | | | |
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0,1 | 1 | | | | |
| 18 | 3 | 2,3 | 1 | | | | |
| 19 | 3 | 4,5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0,2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0,1 | 2 | | | | |
| 37 | 3 | 2,3 | 2 | | | | |
| 38 | 3 | 4,5 | 2 | | | | |
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |
| 43 | 3 | 2,3,8 | 2 | | | | |
| 44 | 3 | 4,5,10 | 2 | | | | |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58-63 | Reserved | Reserved | Reserved | | | | |

**[Table 16]**

| One codeword: | | | | Two Codewords: | | | |
|---|---|---|---|---|---|---|---|
| Codeword 0 enabled, | | | | Codeword 0 enabled, | | | |
| Codeword 1 disabled | | | | Codeword 1 enabled | | | |
| Value | Number of DMRS CDM group(s) without data | DMRS port(s) | Number of front-load symbols | Value | Number of DMRS CDM group(s) without data | DMRS port(s) | Number of front-load symbols |
| 0 | 1 | 0 | 1 | 0 | 3 | 0-4 | 1 |
| 1 | 1 | 1 | 1 | 1 | 3 | 0-5 | 1 |
| 2 | 1 | 0,1 | 1 | 2 | 2 | 0,1,2,3,6 | 2 |
| 3 | 2 | 0 | 1 | 3 | 2 | 0,1,2,3,6,8 | 2 |
| 4 | 2 | 1 | 1 | 4 | 2 | 0,1,2,3,6,7,8 | 2 |
| 5 | 2 | 2 | 1 | 5 | 2 | 0,1,2,3,6,7,8,9 | 2 |
| 6 | 2 | 3 | 1 | 6-63 | Reserved | Reserved | Reserved |
| 7 | 2 | 0,1 | 1 | | | | |
| 8 | 2 | 2,3 | 1 | | | | |
| 9 | 2 | 0-2 | 1 | | | | |
| 10 | 2 | 0-3 | 1 | | | | |
| 11 | 3 | 0 | 1 | | | | |
| 12 | 3 | 1 | 1 | | | | |
| 13 | 3 | 2 | 1 | | | | |
| 14 | 3 | 3 | 1 | | | | |
| 15 | 3 | 4 | 1 | | | | |
| 16 | 3 | 5 | 1 | | | | |
| 17 | 3 | 0,1 | 1 | | | | |
| 18 | 3 | 2,3 | 1 | | | | |
| 19 | 3 | 4,5 | 1 | | | | |
| 20 | 3 | 0-2 | 1 | | | | |
| 21 | 3 | 3-5 | 1 | | | | |
| 22 | 3 | 0-3 | 1 | | | | |
| 23 | 2 | 0,2 | 1 | | | | |
| 24 | 3 | 0 | 2 | | | | |
| 25 | 3 | 1 | 2 | | | | |
| 26 | 3 | 2 | 2 | | | | |
| 27 | 3 | 3 | 2 | | | | |
| 28 | 3 | 4 | 2 | | | | |
| 29 | 3 | 5 | 2 | | | | |
| 30 | 3 | 6 | 2 | | | | |
| 31 | 3 | 7 | 2 | | | | |
| 32 | 3 | 8 | 2 | | | | |
| 33 | 3 | 9 | 2 | | | | |
| 34 | 3 | 10 | 2 | | | | |
| 35 | 3 | 11 | 2 | | | | |
| 36 | 3 | 0,1 | 2 | | | | |
| 37 | 3 | 2,3 | 2 | | | | |
| 38 | 3 | 4,5 | 2 | | | | |
| 39 | 3 | 6,7 | 2 | | | | |
| 40 | 3 | 8,9 | 2 | | | | |
| 41 | 3 | 10,11 | 2 | | | | |
| 42 | 3 | 0,1,6 | 2 | | | | |
| 43 | 3 | 2,3,8 | 2 | | | | |
| 44 | 3 | 4,5,10 | 2 | | | | |
| 45 | 3 | 0,1,6,7 | 2 | | | | |
| 46 | 3 | 2,3,8,9 | 2 | | | | |
| 47 | 3 | 4,5,10,11 | 2 | | | | |
| 48 | 1 | 0 | 2 | | | | |
| 49 | 1 | 1 | 2 | | | | |
| 50 | 1 | 6 | 2 | | | | |
| 51 | 1 | 7 | 2 | | | | |
| 52 | 1 | 0,1 | 2 | | | | |
| 53 | 1 | 6,7 | 2 | | | | |
| 54 | 2 | 0,1 | 2 | | | | |
| 55 | 2 | 2,3 | 2 | | | | |
| 56 | 2 | 6,7 | 2 | | | | |
| 57 | 2 | 8,9 | 2 | | | | |
| 58 | 2 | 0,2,3 | 1 | | | | |
| 59-63 | Reserved | Reserved | Reserved | | | | |

For a DMRS port (or DMRS configuration) that requires an FD-OCC off instruction, described in section 1-1)-(1), FD -OCC off may be indicated using one (or a combination of two or more) of the methods described below. However, DMRS ports (or DMRS configuration) requiring FD-OCC off indication are not limited to the cases listed in section 1-1)-(1).

### 1-1)-(2) FD-OCC off indication by higher layer signaling such as RRC

Section 1-1)-(2) describes a method of indicating FD-OCC off through higher layer signaling such as RRC. An RRC parameter for FD-OCC off indication may be configured only for a specific SCS (e.g., 960 kHz), or may be configured regardless of the SCS (to apply to all SCSs). Whether FD-OCC is off may be configured independently for each of a plurality of SCSs through one RRC signaling. The RRC parameter for the FD-OCC off indication may have a default value. The default value may be different for each SCS.

In the method described later, the DMRS port (or antenna port field index) to which FD-OCC off is applied may be any DMRS port (or antenna port field index) indicated by DCI, depending on a proposed method. Alternatively, the DMRS port (or antenna port field index) to which FD-OCC off is applied may be limited to a specific DMRS port (or antenna port field index) listed in section 1-1)-(1) above.

A BS may indicate FD-OCC off to a UE by using one (or a combination of two or more) of the methods described below. The FD-OCC off indication method using a DCI field, described in section 1-1)-(3), and the methods in section 1-1)-(2) may be linked and used.

### (Method 2-1)

Method 2-1 is a method of configuring FD-OCC off indication by using one RRC parameter. For example, for a FD-OCC off operation, one RRC parameter may be configured to one of {enable, disable}. Alternatively, for a FD-OCC off operation, one RRC parameter may be configured only to {enable}. When a value of the RRC parameter is enable, the UE may operate assuming that DMRS port(s) belonging to the same CDM group as the corresponding indicated port(s) and having an FD-OCC relationship are FD-OCC off with the corresponding indicated port for all DMRS ports or antenna port index indicated through the antenna port field of DCI. When a value of the corresponding RRC parameter is disable or when the corresponding RRC parameter is not received and/or configured, the UE may not assume FD-OCC off. The default value of the corresponding RRC parameter may be 'disable', and the default value may be defined separately for each SCS. The RRC parameter configuring method and default value configuring method are not limited to the above example.

### (Method 2-2)

Method 2-2 is a method in which a BS informs a UE of a threshold of an MCS to wihch FD-OCC off is applied by using one RRC parameter. Also in this method, the UE may operate assuming that DMRS port(s) belonging to the same CDM group as the corresponding indicated port(s) and having an FD-OCC relationship are FD-OCC off with the corresponding indicated port (s) for all DMRS ports or antenna port index indicated through the antenna port field of DCI. When a gap between adjacent REs to which OCC is applied becomes larger than a channel coherence bandwidth, channel estimation performance deteriorates, and thus an FD-OCC off operation is used to prevent this. In general, as an MCS is increased, the resulting performance degradation (considering the effects of AWGN and fading channels) may increase. Therefore, as the MCS increases, the performance degradation due to application of FD-OCC becomes more severe, and a degree of performance degradation due to FD-OCC is low in a low MCS, and thus there is a practical benefit in introducing a MCS threshold.

As an example of a specific operation method, when a MCS threshold (=K) is configured, the UE operates assuming FD-OCC off if the MCS value configured for the corresponding PDSCH is equal to or more than (or greater than) K, and in other cases, operates assuming FD-OCC on. For example, when K is defined as one of MCS values corresponding to 64-Quadrature Amplitude Modulation (QAM), the UE may operate assuming FD-OCC off for DMRS port(s) indicated through DCI for a PDSCH configured with a MCS value equal to or greater than (or more) than the value. The UE may operate assuming FD-OCC on for the DMRS port(s) indicated through DCI for a PDSCH configured with an MCS value configured below (or less than) the MCS value corresponding to 64-QAM. A threshold K may be pre-defined as one value regardless of a SCS. The threshold K may be independently predefined for each SCS. The threshold K may be defined only for a specific SCS (e.g., 960 kHz). The threshold K is not determined for a specific MCS, but may be defined for a specific modulation order. The default value of the corresponding RRC parameter may be configured to one (e.g., MCS22). Alternatively, the default value of the corresponding RRC parameter may be configured differently for each SCS (e.g., MCS24 for 480 kHz or MCS22 for 960 kHz). The RRC parameter configuring method and default value configuring method are not limited to the above example. In this specification, a combination of MCS and numbers (e.g., MCS0 to MCS 31) may be a value corresponding to an MCS index of the 3GPP TS 38.214 document. For example, MCS1 indicates that the MCS index (I MCS) value is 0, and MCS7 indicates that the MCS index value is 7, The MCS index value may be indicated by a 5-bit MCS field in DCI. MCS7 corresponds to QPSK as a modulation order, MCS16 corresponds to 16 QAM, and MCS 22 and MCS 26 correspond to 64 QAM.

### (Method 2-3)

Method 2-3 is a method of indicating FD-OCC off and a threshold value of an MCS to which FD-OCC off is applied using two RRC parameters. For example, a first RRC parameter configures enable/disable for FD-OCC off and a second RRC parameter configures an MCS threshold. In other words, this may be understood as a method of indicating FD-OCC off using (Method 2-1) and (Method 2-2) described above. Also in this method, the UE may operate assuming that DMRS port(s) belonging to the same CDM group as the corresponding indicated port(s) and having an FD-OCC relationship are FD-OCC off with the corresponding indicated port (s) for all DMRS ports or antenna port index indicated through the antenna port field. As an embodiment for this, when a value of the first RRC parameter is disable or when the first RRC parameter is not received and/or configured, the UE may not assume FD-OCC off regardless of the second RRC parameter. When both the first RRC parameter and the second RRC parameter are enable, the UE may assume an FD-OCC off operation based on an MCS threshold included in the second RRC parameter. When the value of the first RRC parameter is enable and the second RRC parameter is not received and/or configured, the UE may operate according to a basic MCS threshold disclosed in Method 2-2.

### (Method 2-4)

Method 2-4 is a method of indicating a threshold of MCS to which FD-OCC off is applied and a specific DMRS port (or antenna port field index) to which FD-OCC off is applied by using two RRC parameters. In this method, a BS may inform a UE of FD-OCC off indication and MCS threshold through the first RRC parameter (method 2-1 or 2-2 or 2-3 described above may be applied). The BS may inform the UE of a specific DMRS port to which FD-OCC off is applied through the second RRC parameter. In this specification, a DMRS port may be replaced with an antenna port field index. That is, when the FD-OCC off indication and MCS threshold are configured through the first RRC parameter, the UE determines that FD-OCC off may be enabled. In situations in which FD-OCC may be enabled, the UE operates assuming FD-OCC off only for a specific DMRS port notified by the BS through the second RRC parameter. The BS may not assume FD-OCC of for DMRS ports that are not notified by the BS through the second RRC parameter. In this case, the specific DMRS port configured through the second RRC parameter may be a separate DMRS port, a DMRS port set, or a specific CDM group unit, a DMRS port set corresponding to a specific rank, or a DMRS port set corresponding to a specific number of FL DMRS symbols. Default values may be configured independently for each of the first and second RRC parameters.

### (Method 2-5)

A BS informs a UE of FD-OCC off indication and/or MCS threshold and/or the specific DMRS port to which FD-OFF off is applied through an RRC parameter. Method 2-5 is a method of determining application of FD-OCC off according to configuration of a PDSCH even if the UE determines that FD-OCC off is enabled through the RRC parameter. That is, the FD-OCC off indication is performed through the RRC parameter of one (or a combination of two or more) of the methods (2-1) to (2-4) proposed above. Even assuming that the UE is capable of applying FD-OCC off through the RRC parameter, the UE may determine whether to apply FD-OCC off depending on the configuration of the PDSCH that includes the corresponding DMRS. In this case, the standard PDSCH configuration may include configured SCS, a PDSCH mapping type (e.g., PDSCH mapping typeA or typeB), DMRS type (e.g., type1 or type2), whether or not additional DMRS is used, a configured PTRS pattern, configured MCS, a configured number of layers, transmission rank, and/or presence or absence of MU-MIMO pairing.

### 1-1)-(3) FD-OCC off indication using DCI field

Section 1-1)-(3) discloses an FD-OCC off indication method using DCI field. The FD-OCC off indication method described below may be applied only to a specific SCS (e.g., 960 kHz), may be applied regardless of the SCS (to be applied to all SCSs), or may be applied independently to each SCS.

In the proposed method described below, the DMRS port to which FD-OCC off is applied may be any DMRS port indicated by DCI. Alternatively, DMRS ports to which FD-OCC off is applied may be limited to specific DMRS ports listed in section 1-1)-(1) above.

FD-OCC off may be indicated through one (or a combination of two or more) of the proposed methods of 1-1)-(3). Each of the proposed methods in 1-1)-(3) may be used in combination with the FD-OCC off indication method via higher layer signaling such as RRC.

### (Method 3-1)

Method 3-1 is a method that uses a reserved row index of an antenna port table of Rel-15/16. As described above, there are different antenna port tables (e.g., Table 7) depending on a DMRS type and the number of FL DMRS symbols, and there is a reserved row index (hereinafter also expressed as a reserved index) for each table. FD-OCC off indication may be possible using the reserved index. As an example of this, there are four reserved indexes in Table 7, of which index 12 indicates "1 as the number of CDM groups + DMRS port 1000, and in this case, DMRS port 1000 and port 1001 are FD-OCC off'. That is, index 12 may be used as an FD-OCC off indication added to index 0. Similarly, index 13 may be used as an FD-OCC off indication added to index 3. Index 14 may be used as an FD-OCC off indication added to index 5.

Depending on a DMRS type and the number of FL DMRS symbols, the number of reserved indexes in the antenna port table may be less than the number required for the FD-OCC off indication. In this case, FD-OCC off indication may be performed only for a limited number of DMRS configuration using only an available number of reserved indices. In this case, the limited specific number and corresponding DMRS configurations may be defined in advance according to the DMRS type and/or number of FL DMRS symbols. Alternatively, the BS may inform the UE of a limited number of specific numbers and corresponding DMRS configurations through higher layer signaling such as separate RRC.

In one embodiment of this, when a reserved index is insufficient, FD-OCC off indication may be sequentially assigned to the reserved index from the lowest index from among rows (or indexes) that require the FD-OCC off indication. For example, to indicate that FD-OCC off is applied to indices 0, 3, and 5 of Table 7, 12, 13, and 14 from among the reserved indices 12 to 15 may be used, respectively. As another example, a reserved index for one codeword in Table 11 is only 31, and thus the reserved index 31 may indicate that FD-OCC off is applied to index 0 in Table 11. In this case, from among indexes that require the FD-OCC off indication listed in section 1-1)-(1), FD-OCC off is not applied to the remaining indexes except index 0.

In another embodiment, when the reserved index is insufficient, the indexes of the table including the corresponding reserved index are assigned to the reserved index in descending order of transmission rank. If the reserved index is insufficient, the indexes of the table containing the corresponding reserved index may be assigned to the reserved index in descending order of the number of CDM groups. From among the same rank or the same number of CDM groups, a row index may be assigned to the reserved index starting from the index with the lowest row index.

### (Method 3-2)

Method 3-2 is a method of using a reserved index of two codeword enabled portions of the antenna port table as the DMRS configuration of the one codeword enabled portion. From among the antenna port tables supported by Rel-15/16, different tables may be used depending on the number of codewords enabled in a PDSCH. For example, when maxLength=2, Table 1 (=codeword0 enable & codeword1 disable) and Table 2 (=codeword0 enable & codeword1 enable) exist. In this case, when the reserved index of Table 1 is insufficient, the FD-OCC off indication of the DMRS configuration for Table 1 may be performed using the reserved index of Table 2. When only one codeword is enabled or when two codewords are enabled and then one codeword is disabled under certain conditions (e.g., specific MCS and specific RV combination), DMRS configuration is performed using Table 1. In a situation in which two codewords are enabled and there is no disabled codeword, when the antenna port field value indicated by DCI refers to the reserved index of Table 2 even if there is a disabled codeword, the UE may interpret an indicated antenna part value to be a row index of Table 1 and assume that FD-OCC off is applied at the same time.

### (Method 3-3)

Method 3-3 is a method of defining a new table in which all rows of the antenna port table are configured with FD-OCC off indication and indicating DMRS configuration as FD-OCC off through the new table. In this case, the antenna port field of DCI may be used as a row index of a table with DMRS configurations of FD-OCC off, as in the past.

### (Method 3-4)

Method 3-4 is a method of using an antenna port table of DMRS type 2 as DMRS configuration for DMRS type 1 to which FD-OCC off is applied when only DMRS type 1 is used in a specific band and DMRS type 2 is not used. That is, in a situation of a frequency band in which DMRS Type 2 is never used, an antenna port table of DMRS Type 2 may be redefined to indicate the form in which FD-OCC is applied to each DMRS configuration of an antenna port table of DMRS Type 1. That is, when a UE knows that DMRS Type 2 is an unused frequency band and a configuration for DMRS Type 2 is received, the UE may interpret the corresponding configuration as a Type 1 DMRS configuration with FD-OCC off applied and operate.

### (Method 3-5)

Method 3-5 is a method of doubling an antenna port table A by increasing an antenna port field of DCI by 1 bit and adding a DMRS port indication to which FD-OCC off is applied to an antenna port table.

### (Method 3-6)

Method 3-6 is a method of performing FD-OCC off using an unused DMRS port or an unused index of the antenna port table. In a specific NR band (e.g., 52.6 GHz), there may be an unused antenna port index explicitly or implicitly. The corresponding unused index is reused for the FD-OCC off indication. As an example of an implicitly unused DMRS port, a specific DMRS port may not be used when PTRS is configured. As another example, when PTRS is configured, two codewords may not be used at the same time.

### 1-2) PTRS pattern configuration for DFT-s-OFDM system

In the present section, a method of configuring a PTRS pattern for DFT-s-OFDM system will be described. PTRS patterns supported in NR Rel-15/16, i.e., a combination of (Ng, Ns) may include (2,2), (2,4), (4,2), (4,4), (8,4). Depending on RB allocation, one of these patterns may be configured. Table 17 is Table 6.2.3.2-1 of the 3GPP TS 38.214 document and shows a PTRS group pattern expressed as a function of scheduled bandwidth. As shown in Table 17 below, the number of allocated RBs is divided into five sections, and the PTRS pattern used in each section is determined. For convenience of description, N_RB0 =< N_RB < N_RB1 is expressed as RB-range0, N_RB1 =< N_RB < N_RB2 is expressed as RB-range1, N_RB2 =< N_RB < N_RB3 is expressed as RB-range2, N_RB3 =< N_RB < N_RB4 is expressed as RB-range3, and N_RB4 =< N_RB is expressed as RB-range4.

**[Table 17]**

| Scheduled bandwidth | Number of PT-RS groups | Number of samples per PT-RS group |
|---|---|---|
| *N_{RB0}* ≤*N_{RB}* < *N_{RB1}* | 2 | 2 |
| *N_{RB1}* ≤ *N_{RB} < N_{RB2}* | 2 | 4 |
| *N_{RB2}* ≤ *N_{RB} < N_{RB3}* | 4 | 2 |
| *N_{RB3}* ≤ *N_{RB} < N_{RB4}* | 4 | 4 |
| *N_{RB4}* ≤ *N_{RB}* | 8 | 4 |

For a high frequency band above 52.6 GHz, additional patterns in addition to five PTRS patterns above may be considered. For example, patterns such as (Ng,Ns)=(16,2) or (16,4) may be used, and a method of indicating a UE of these additional PTRS patterns may be necessary. The existing five PTRS patterns are selected according to an RB allocation size. The additional PTRS pattern may be configured depending on an SCS or a configured MCS. In this situation, an appropriate method of indicating these additional PTRS patterns to a UE may be needed. In the method described below, a newly added PTRS pattern (e.g., (Ng,Ns)=(16,2) or (16,4)) is expressed as "Ng=16 pattern" for convenience of explanation, but the proposed methods are not necessarily restricted to being used for specific patterns.

In the methods described below, a newly defined RRC parameter may be configured only for a specific SCS (e.g., 120 kHz), may be configured regardless of an SCS (to apply to all SCSs), or may be configured independently for each SCS (using one RRC). The corresponding RRC parameter may have a default value and may have different default values for respective SCSs. When the corresponding RRC parameter is not configured, the UE may operate using a default value of the corresponding RRC parameter, or may follow conventional operation (with the corresponding RRC not defined).

### 1-2)-(1) MCS threshold is configured and PTRS pattern is configured based thereon

This is a method of applying a new PTRS pattern only when an MCS configured in a PUSCH is greater than or equal to (or exceeds) a specific MCS. An MCS threshold (=K2) is defined and/or configured through higher layer signaling such as RRC. When an MCS value configured in an PUSCH is greater than or equal to K (or exceeds K), a new PTRS pattern (e.g., Ng = 16 pattern) is applied, otherwise, the conventional PTRS pattern (e.g., pattern with Ng = 8 or less) may be applied. For example, it is assumed that K for SCS of 120 kHz is configured to 22 in an FR2-2 band via RRC. When an MCS of a PUSCH is configured to MCS22 or more, Ng = 16 pattern is used. When the MCS of the PUSCH is configured to less than MCS22, the conventional PTRS pattern may be used. As a threshold, a specific modulation order may be used instead of MCS.

### (Method 1-1)

Method 1-1 is a method of applying an MCS threshold as a reference for using a new PTRS pattern only for specific RB-ranges. In a range from conventional RB-range0 to RB-range4, a new PTRS pattern may be applied based on an MCS threshold only in a specific RB-range (or specific RB-ranges). For example, in certain RB-range(s), a conventional PTRS pattern of Ng = 8 or less or a new PTRS pattern of Ng = 16 is used depending on an MCS threshold condition. In other RB-range(s), the conventional PTRS pattern of Ng=8 or less is always used.

In a specific embodiment, the MCS threshold may be configured to K=22 (i.e., MCS22) through RRC. As an MCS increases, the performance gain to be achieved with the PTRS pattern with Ng=16 may increase. As Ng increases, PTRS overhead increases, and thus in consideration of a trade-off relationship, configuration of a threshold to MCS22 may provide the highest benefit. Performance gain may vary depending on configuration of of data channels such as a PDSCH, and thus configuration of a threshold to a value other than MCS22 may provide the highest gain depending on configuration of a data channel. The configuration of the data channel, as in Method 2-5, may include a configured SCS, a PDSCH mapping type, a DMRS type, use of additional DMRS, a configured PTRS pattern, a configured MCS, the number of configured layers, a transmission rank, and/or MU-MIMO pairing. The number of RBs for which the UE checks the MCS threshold may be configured to 160, for example. When RB allocation is less than/less than 160, the conventional PTRS pattern is used regardless of MCS. When the RB allocation is 160 or more, a new PTRS pattern may be used when the MCS configured in the PUSCH is MCS22 or more, and a conventional PTRS pattern may be used when the MCS is less than or equal to MCS22.

In another embodiment, the UE may determine whether to use a new PTRS pattern by applying a MCS threshold only when the allocated RB allocation is RB-range4, and operate assuming the conventional PTRS pattern without defining/configuring a new PTRS pattern for other RB allocations.

In this method, specific RB-range(s) may be predefined for each SCS or configured using a separate RRC.

### (Method 1-2)

Method 1-2 is a method of applying an MCS threshold to all RB-ranges (i.e., regardless of RB allocation) as a reference for using a new PTRS pattern. Regardless of the conventional RB-range, a conventional PTRS pattern of Ng = 8 or less may be used for all RB ranges according to an MCS threshold condition. Regardless of the conventional RB-range, a new PTRS pattern of Ng = 16 may be used for all RB ranges according to an MCS threshold condition.

According to an embodiment therefor, the MCS threshold may be configured to K=22 (i.e., MCS22) through RRC. When the MCS configured in the PUSCH is greater than or equal to MCS22 (regardless of the number of RB allocations configured in the PUSCH), a new PTRS pattern may be used, and when the MCS is equal to or less than MCS22, the conventional PTRS pattern may be used.

### 1-2)-(2) RB threshold is configured and PTRS pattern is configured based thereon

As a method to apply a new PTRS pattern only when the number of RBs configured in the PUSCH is greater than or equal to (or exceeds) a certain number, an RB threshold (=M) may be defined through higher layer signaling such as RRC. The UE may use an RB threshold received through higher layer signaling from a BS. When an RB value configured in an PUSCH is greater than or equal to M (or exceeds M), a new PTRS pattern (e.g., (Ng,Ns)=(16,2) or (16.4)) is applied, otherwise, the conventional PTRS pattern (e.g., pattern with Ng = 8 or less) may be used. The RB threshold configured via RRC may be one of N_RB0, N_RB1, N_RB2, N_RB3, and N_RB4 that are used to determine the conventional RB-range. The RB threshold configured via RRC may be a separate RRC parameter from N_RB0, N_RB1, N_RB2, N_RB3, and N_RB4. For example, the UE may operate while using Ng = 16 pattern when the number of RBs allocated to the PUSCH belongs to RB-range4 when the BS configures M for SCS of 120 kHz to N_RB4 in an FR2-2 band through RRC signaling and assuming one of the conventional PTRS patterns mapped to the corresponding RB-range when the number of RBs allocated to the PUSCH is equal to or less than RB-range4.

### 1-2)-(3) MCS threshold and RB threshold are configured and PTRS pattern is configured based thereon

Whether or not to use a new PTRS may be determined by simultaneously using an MCS threshold K through RRC and an RB threshold M through RRC, described in the previous two sections. The UE may operate to apply a new PTRS pattern only when the number of RBs allocated to the PUSCH is greater than or equal to M and the configured MCS is greater than or equal to K, and to apply the conventional PTRS pattern in other cases.

In this case, the MCS threshold and the RB threshold may each be defined/configured via separate RRCs. Alternatively, the MCS threshold and the RB threshold may be configured together in one RRC.

A mode in which PTRS is not used may be additionally configured through the MCS threshold and/or the RB threshold. For example, when the number of RBs allocated to the PUSCH is less than or equal to M and the MCS set is less than or equal to K, the UE may be configured not to use PTRS.

A default values of the MCS threshold and/or the RB threshold may be jointly determined or independently determined. When RRC is not configured for the MCS threshold and/or the RB threshold, or only one of the two is configured, the UE may operate using the default value instead of the unconfigured threshold.

### Implementation example

FIG. 4 is a flowchart of a signal transmission and reception method according to embodiments of the present disclosure.

Referring to FIG. 4, embodiments of the present disclosure may be performed by a UE and may include receiving information indicating a DM-RS port in relation to PDSCH reception (S1001) and receiving the PDSCH and the DM-RS based on the information (S 1003).

In addition to the operation of FIG. 4, one or more of the operations described in Section 1 may be combined and performed by the UE.

For example, according to sections 1-1)-(2), FD-OCC off may be indicated via higher layer signaling such as RRC. According to method 2-3, a first RRC parameter indicating deactivation of frequency domain OCC for a DM-RS port in method 2-1 and a second RRC parameter indicating a threshold value of MCS for FD-OCC off to be applied in method 2-2 may be received. The UE may apply FD-OCC off to the DM-RS port indicated by the information, based on the received first and second parameters. As a specific example, based on reception of the first RRC parameter, the UE recognizes that FD-OCC off is possible, and when the MCS of the received PDSCH is greater than or equal to (or exceeds) the threshold indicated through the second parameter, the UE may apply FD-OCC off to the DM-RS port for reception of DM_RS associated with the PDSCH.

The first parameter and the second parameter may be received by the same RRC signaling. RRC signaling may include a first parameter and not include a second parameter, and when the UE receives RRC signaling including only the first parameter without the second parameter, a predefined default value according to method 2-2 may be used as the threshold for MCS.

As described in Method 2-2, the default value for the threshold may be defined based on the SCS value used for the PDSCH. In detail, the default value for the threshold may be defined only for a specific SCS or may be defined for each of a plurality of SCSs. Referring to Method 2-2, the threshold may be an MCS value corresponding to 64-QAM. As explained above, generally, as the MCS increases, channel estimation performance degradation may increase. Therefore, as the MCS increases, the performance degradation due to application of FD-OCC becomes more severe, and a degree of performance degradation due to FD-OCC is low in a low MCS, and thus there is a practical benefit in introducing a MCS threshold.

A name of the first parameter may be dmrs-FD-OCC-disableForRank1-PDSCH or dmrs-FD-OCC-disableForRank1PDSCH.

In summary, based on that the UE receives RRC signaling for frequency domain OCC deactivation for the DM-RS port and an MCS for the PDSCH is greater than or equal to a threshold value, orthogonal DM-RS port belonging to the same CDM group as the DM-RS port may not be associated with any UE other than the above UE. The fact that an orthogonal DM-RS port belonging to the same CDM group as the DM-RS port is not associated with any other UE other than the UE may be understood that the orthogonal DM-RS port belonging to the same CDM group as the DM-RS port is not assigned to the other UE.

The operations of Section 1 are more efficient when a high SCS is used in an FR2-2 band, and thus RRC signaling including the first parameter may be received based on that an SCS of 480 kHz or an SCS of 960 kHz is used.

Referring to Method 2-5, RRC signaling including the first parameter may be received based on the type of DM-RS being type 1 or type 2. RRC signaling including the first parameter may be received based on a transmission rank of the DM-RS being 1. Then transmission rank of the DM-RS is 1, and thus the UE may receive a PDSCH scheduled based on the number of DM-RS ports associated with the scheduled PDSCH being a single DM-RS port.

Although not shown in the drawing, other embodiments of the present disclosure may be performed by a UE and may include transmitting information indicating a DM-RS port in relation to PDSCH reception and transmitting the PDSCH and the DM-RS based on the information.

In terms of a BS, one or more of the operations described in Section 1 may be performed in combination. For example, based on that the BS transmits RRC signaling for frequency domain OCC deactivation for the DM-RS port and an MCS for the PDSCH is greater than or equal to a threshold value, orthogonal DM-RS port belonging to the same CDM group as the DM-RS port may not be associated with any UE other than a first UE.

Through this implementation, operations described in terms of a UE side may be performed in terms of a BS side.

In addition to the operations described with reference to FIG. 4, a combination of one or more of the operations described with reference to FIGS. 1 to 3 and/or the operations described in Section 1 may be additionally performed.

### Example of communication system to which the present disclosure is applied

The various descriptions, functions, procedures, proposals, methods, and/or operation flowcharts of the present disclosure described herein may be applied to, but not limited to, various fields requiring wireless communication/connectivity (e.g., 5G) between devices.

More specific examples will be described below with reference to the drawings. In the following drawings/description, like reference numerals denote the same or corresponding hardware blocks, software blocks, or function blocks, unless otherwise specified.

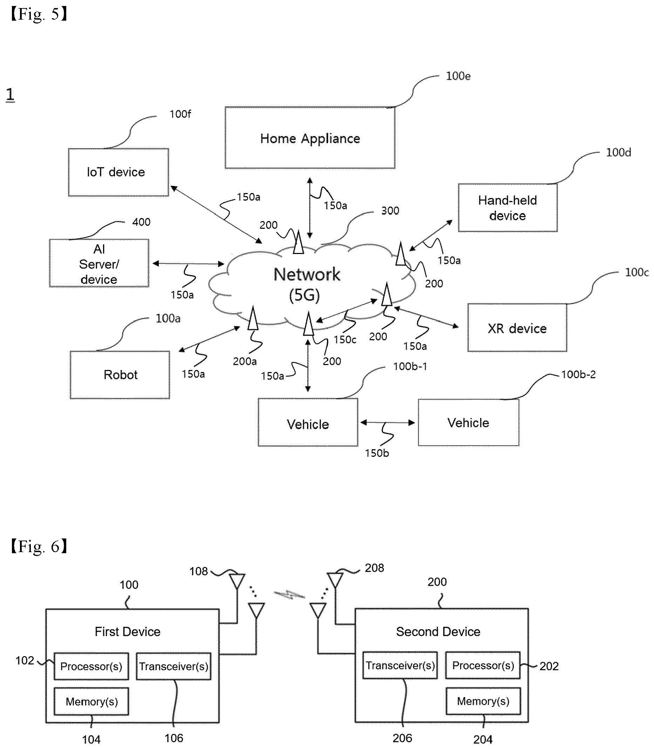

FIG. 5 illustrates a communication system 1 applied to the present disclosure.

Referring to FIG. 5, the communication system 1 applied to the present disclosure includes wireless devices, BSs, and a network. A wireless device is a device performing communication using radio access technology (RAT) (e.g., 5G NR (or New RAT) or LTE), also referred to as a communication/radio/5G device. The wireless devices may include, not limited to, a robot 100a, vehicles 100b-1 and 100b-2, an extended reality (XR) device 100c, a hand-held device 100d, a home appliance 100e, an IoT device 100f, and an artificial intelligence (AI) device/server 400. For example, the vehicles may include a vehicle having a wireless communication function, an autonomous driving vehicle, and a vehicle capable of vehicle-to-vehicle (V2V) communication. Herein, the vehicles may include an unmanned aerial vehicle (UAV) (e.g., a drone). The XR device may include an augmented reality (AR)/virtual reality (VR)/mixed reality (MR) device and may be implemented in the form of a head-mounted device (HMD), a head-up display (HUD) mounted in a vehicle, a television (TV), a smartphone, a computer, a wearable device, a home appliance, a digital signage, a vehicle, a robot, and so on. The hand-held device may include a smartphone, a smart pad, a wearable device (e.g., a smart watch or smart glasses), and a computer (e.g., a laptop). The home appliance may include a TV, a refrigerator, a washing machine, and so on. The IoT device may include a sensor, a smart meter, and so on. For example, the BSs and the network may be implemented as wireless devices, and a specific wireless device 200a may operate as a BS/network node for other wireless devices.

The wireless devices 100a to 100f may be connected to the network 300 via the BSs 200. An AI technology may be applied to the wireless devices 100a to 100f, and the wireless devices 100a to 100f may be connected to the AI server 400 via the network 300. The network 300 may be configured using a 3G network, a 4G (e.g., LTE) network, or a 5G (e.g., NR) network. Although the wireless devices 100a to 100f may communicate with each other through the BSs 200/network 300, the wireless devices 100a to 100f may perform direct communication (e.g., sidelink communication) with each other without intervention of the BSs/network. For example, the vehicles 100b-1 and 100b-2 may perform direct communication (e.g., V2V/vehicle-to-everything (V2X) communication). The IoT device (e.g., a sensor) may perform direct communication with other IoT devices (e.g., sensors) or other wireless devices 100a to 100f.

Wireless communication/connections 150a, 150b, and 150c may be established between the wireless devices 100a to 100fBS 200 and between the BSs 200. Herein, the wireless communication/connections may be established through various RATs (e.g., 5G NR) such as UL/DL communication 150a, sidelink communication 150b (or, D2D communication), or inter-BS communication (e.g., relay or integrated access backhaul (IAB)). Wireless signals may be transmitted and received between the wireless devices, between the wireless devices and the BSs, and between the BSs through the wireless communication/connections 150a, 150b, and 150c. For example, signals may be transmitted and receive don various physical channels through the wireless communication/connections 150a, 150b and 150c. To this end, at least a part of various configuration information configuring processes, various signal processing processes (e.g., channel encoding/decoding, modulation/demodulation, and resource mapping/demapping), and resource allocation processes, for transmitting/receiving wireless signals, may be performed based on the various proposals of the present disclosure.

### Example of wireless device to which the present disclosure is applied

FIG. 6 illustrates wireless devices applicable to the present disclosure.

Referring to FIG. 6, a first wireless device 100 and a second wireless device 200 may transmit wireless signals through a variety of RATs (e.g., LTE and NR). {The first wireless device 100 and the second wireless device 200} may correspond to {the wireless device 100x and the BS 200} and/or {the wireless device 100x and the wireless device 100x} of FIG. 5.

The first wireless device 100 may include one or more processors 102 and one or more memories 104, and further include one or more transceivers 106 and/or one or more antennas 108. The processor(s) 102 may control the memory(s) 104 and/or the transceiver(s) 106 and may be configured to implement the descriptions, functions, procedures, proposals, methods, and/or operation flowcharts disclosed in this document. For example, the processor(s) 102 may process information in the memory(s) 104 to generate first information/signals and then transmit wireless signals including the first information/signals through the transceiver(s) 106. The processor(s) 102 may receive wireless signals including second information/signals through the transceiver(s) 106 and then store information obtained by processing the second information/signals in the memory(s) 104. The memory(s) 104 may be connected to the processor(s) 102 and may store various pieces of information related to operations of the processor(s) 102. For example, the memory(s) 104 may store software code including instructions for performing all or a part of processes controlled by the processor(s) 102 or for performing the descriptions, functions, procedures, proposals, methods, and/or operation flowcharts disclosed in this document. The processor(s) 102 and the memory(s) 104 may be a part of a communication modem/circuit/chip designed to implement RAT (e.g., LTE or NR). The transceiver(s) 106 may be connected to the processor(s) 102 and transmit and/or receive wireless signals through the one or more antennas 108. Each of the transceiver(s) 106 may include a transmitter and/or a receiver. The transceiver(s) 106 may be interchangeably used with radio frequency (RF) unit(s). In the present disclosure, the wireless device may be a communication modem/circuit/chip.

The second wireless device 200 may include one or more processors 202 and one or more memories 204, and further include one or more transceivers 206 and/or one or more antennas 208. The processor(s) 202 may control the memory(s) 204 and/or the transceiver(s) 206 and may be configured to implement the descriptions, functions, procedures, proposals, methods, and/or operation flowcharts disclosed in this document. For example, the processor(s) 202 may process information in the memory(s) 204 to generate third information/signals and then transmit wireless signals including the third information/signals through the transceiver(s) 206. The processor(s) 202 may receive wireless signals including fourth information/signals through the transceiver(s) 106 and then store information obtained by processing the fourth information/signals in the memory(s) 204. The memory(s) 204 may be connected to the processor(s) 202 and store various pieces of information related to operations of the processor(s) 202. For example, the memory(s) 204 may store software code including instructions for performing all or a part of processes controlled by the processor(s) 202 or for performing the descriptions, functions, procedures, proposals, methods, and/or operation flowcharts disclosed in this document. The processor(s) 202 and the memory(s) 204 may be a part of a communication modem/circuit/chip designed to implement RAT (e.g., LTE or NR). The transceiver(s) 206 may be connected to the processor(s) 202 and transmit and/or receive wireless signals through the one or more antennas 208. Each of the transceiver(s) 206 may include a transmitter and/or a receiver. The transceiver(s) 206 may be interchangeably used with RF unit(s). In the present disclosure, the wireless device may be a communication modem/circuit/chip.

Now, hardware elements of the wireless devices 100 and 200 will be described in greater detail. One or more protocol layers may be implemented by, not limited to, one or more processors 102 and 202. For example, the one or more processors 102 and 202 may implement one or more layers (e.g., functional layers such as physical (PHY), medium access control (MAC), radio link control (RLC), packet data convergence protocol (PDCP), RRC, and service data adaptation protocol (SDAP)). The one or more processors 102 and 202 may generate one or more protocol data units (PDUs) and/or one or more service data Units (SDUs) according to the descriptions, functions, procedures, proposals, methods, and/or operation flowcharts disclosed in this document. The one or more processors 102 and 202 may generate messages, control information, data, or information according to the descriptions, functions, procedures, proposals, methods, and/or operation flowcharts disclosed in this document and provide the messages, control information, data, or information to one or more transceivers 106 and 206. The one or more processors 102 and 202 may generate signals (e.g., baseband signals) including PDUs, SDUs, messages, control information, data, or information according to the descriptions, functions, procedures, proposals, methods, and/or operation flowcharts disclosed in this document and provide the generated signals to the one or more transceivers 106 and 206. The one or more processors 102 and 202 may receive the signals (e.g., baseband signals) from the one or more transceivers 106 and 206 and acquire the PDUs, SDUs, messages, control information, data, or information according to the descriptions, functions, procedures, proposals, methods, and/or operation flowcharts disclosed in this document.

The one or more processors 102 and 202 may be referred to as controllers, microcontrollers, microprocessors, or microcomputers. The one or more processors 102 and 202 may be implemented by hardware, firmware, software, or a combination thereof. For example, one or more application specific integrated circuits (ASICs), one or more digital signal processors (DSPs), one or more digital signal processing devices (DSPDs), one or more programmable logic devices (PLDs), or one or more field programmable gate arrays (FPGAs) may be included in the one or more processors 102 and 202. The descriptions, functions, procedures, proposals, methods, and/or operation flowcharts disclosed in this document may be implemented using firmware or software, and the firmware or software may be configured to include the modules, procedures, or functions. Firmware or software configured to perform the descriptions, functions, procedures, proposals, methods, and/or operation flowcharts disclosed in this document may be included in the one or more processors 102 and 202 or may be stored in the one or more memories 104 and 204 and executed by the one or more processors 102 and 202. The descriptions, functions, procedures, proposals, methods, and/or operation flowcharts disclosed in this document may be implemented using firmware or software in the form of code, an instruction, and/or a set of instructions.

The one or more memories 104 and 204 may be connected to the one or more processors 102 and 202 and store various types of data, signals, messages, information, programs, code, instructions, and/or commands. The one or more memories 104 and 204 may be configured to include read-only memories (ROMs), random access memories (RAMs), electrically erasable programmable read-only memories (EPROMs), flash memories, hard drives, registers, cash memories, computer-readable storage media, and/or combinations thereof. The one or more memories 104 and 204 may be located at the interior and/or exterior of the one or more processors 102 and 202. The one or more memories 104 and 204 may be connected to the one or more processors 102 and 202 through various technologies such as wired or wireless connection.

The one or more transceivers 106 and 206 may transmit user data, control information, and/or wireless signals/channels, mentioned in the methods and/or operation flowcharts of this document, to one or more other devices. The one or more transceivers 106 and 206 may receive user data, control information, and/or wireless signals/channels, mentioned in the descriptions, functions, procedures, proposals, methods, and/or operation flowcharts disclosed in this document, from one or more other devices. For example, the one or more transceivers 106 and 206 may be connected to the one or more processors 102 and 202 and transmit and receive wireless signals. For example, the one or more processors 102 and 202 may perform control so that the one or more transceivers 106 and 206 may transmit user data, control information, or wireless signals to one or more other devices. The one or more processors 102 and 202 may perform control so that the one or more transceivers 106 and 206 may receive user data, control information, or wireless signals from one or more other devices. The one or more transceivers 106 and 206 may be connected to the one or more antennas 108 and 208 and the one or more transceivers 106 and 206 may be configured to transmit and receive user data, control information, and/or wireless signals/channels, mentioned in the descriptions, functions, procedures, proposals, methods, and/or operation flowcharts disclosed in this document, through the one or more antennas 108 and 208. In this document, the one or more antennas may be a plurality of physical antennas or a plurality of logical antennas (e.g., antenna ports). The one or more transceivers 106 and 206 may convert received wireless signals/channels from RF band signals into baseband signals in order to process received user data, control information, and wireless signals/channels using the one or more processors 102 and 202. The one or more transceivers 106 and 206 may convert the user data, control information, and wireless signals/channels processed using the one or more processors 102 and 202 from the baseband signals into the RF band signals. To this end, the one or more transceivers 106 and 206 may include (analog) oscillators and/or filters.

### Example of use of wireless device to which the present disclosure is applied

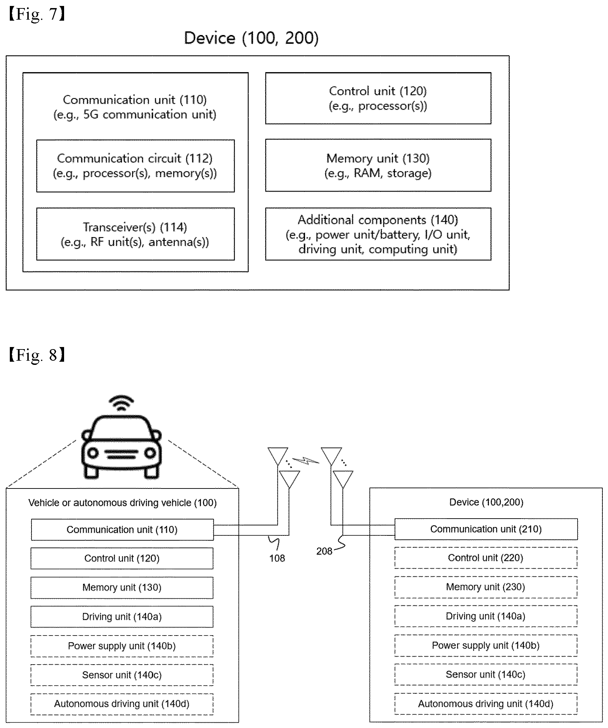

FIG. 7 illustrates another example of a wireless device applied to the present disclosure. The wireless device may be implemented in various forms according to a use case/service (refer to FIG. 5).

Referring to FIG. 7, wireless devices 100 and 200 may correspond to the wireless devices 100 and 200 of FIG. 6 and may be configured to include various elements, components, units/portions, and/or modules. For example, each of the wireless devices 100 and 200 may include a communication unit 110, a control unit 120, a memory unit 130, and additional components 140. The communication unit 110 may include a communication circuit 112 and transceiver(s) 114. For example, the communication circuit 112 may include the one or more processors 102 and 202 and/or the one or more memories 104 and 204 of FIG. 6. For example, the transceiver(s) 114 may include the one or more transceivers 106 and 206 and/or the one or more antennas 108 and 208 of FIG. 6. The control unit 120 is electrically connected to the communication unit 110, the memory 130, and the additional components 140 and provides overall control to the wireless device. For example, the control unit 120 may control an electric/mechanical operation of the wireless device based on programs/code/instructions/information stored in the memory unit 130. The control unit 120 may transmit the information stored in the memory unit 130 to the outside (e.g., other communication devices) via the communication unit 110 through a wireless/wired interface or store, in the memory unit 130, information received through the wireless/wired interface from the outside (e.g., other communication devices) via the communication unit 110.

The additional components 140 may be configured in various manners according to type of the wireless device. For example, the additional components 140 may include at least one of a power unit/battery, input/output (I/O) unit, a driving unit, and a computing unit. The wireless device may be implemented in the form of, not limited to, the robot (100a of FIG. 5), the vehicles (100b-1 and 100b-2 of FIG. 5), the XR device (100c of FIG. 5), the hand-held device (100d of FIG. 5), the home appliance (100e of FIG. 5), the IoT device (100f of FIG. 5), a digital broadcasting terminal, a hologram device, a public safety device, an MTC device, a medical device, a FinTech device (or a finance device), a security device, a climate/environment device, the AI server/device (400 of FIG. 5), the BSs (200 of FIG. 5), a network node, or the like. The wireless device may be mobile or fixed according to a use case/service.

In FIG. 7, all of the various elements, components, units/portions, and/or modules in the wireless devices 100 and 200 may be connected to each other through a wired interface or at least a part thereof may be wirelessly connected through the communication unit 110. For example, in each of the wireless devices 100 and 200, the control unit 120 and the communication unit 110 may be connected by wire and the control unit 120 and first units (e.g., 130 and 140) may be wirelessly connected through the communication unit 110. Each element, component, unit/portion, and/or module in the wireless devices 100 and 200 may further include one or more elements. For example, the control unit 120 may be configured with a set of one or more processors. For example, the control unit 120 may be configured with a set of a communication control processor, an application processor, an electronic control unit (ECU), a graphical processing unit, and a memory control processor. In another example, the memory 130 may be configured with a RAM, a dynamic RAM (DRAM), a ROM, a flash memory, a volatile memory, a non-volatile memory, and/or a combination thereof.

### Example of vehicle or autonomous driving vehicle to which the present disclosure is applied

FIG. 8 illustrates a vehicle or an autonomous driving vehicle applied to the present disclosure. The vehicle or autonomous driving vehicle may be implemented as a mobile robot, a car, a train, a manned/unmanned aerial vehicle (AV), a ship, or the like.

Referring to FIG. 8, a vehicle or autonomous driving vehicle 100 may include an antenna unit 108, a communication unit 110, a control unit 120, a driving unit 140a, a power supply unit 140b, a sensor unit 140c, and an autonomous driving unit 140d. The antenna unit 108 may be configured as a part of the communication unit 110. The blocks 110/130/140a to 140d correspond to the blocks 110/130/140 of FIG. 7, respectively.

The communication unit 110 may transmit and receive signals (e.g., data and control signals) to and from external devices such as other vehicles, BSs (e.g., gNBs and road side units), and servers. The control unit 120 may perform various operations by controlling elements of the vehicle or the autonomous driving vehicle 100. The control unit 120 may include an ECU. The driving unit 140a may enable the vehicle or the autonomous driving vehicle 100 to drive on a road. The driving unit 140a may include an engine, a motor, a powertrain, a wheel, a brake, a steering device, and so on. The power supply unit 140b may supply power to the vehicle or the autonomous driving vehicle 100 and include a wired/wireless charging circuit, a battery, and so on. The sensor unit 140c may acquire information about a vehicle state, ambient environment information, user information, and so on. The sensor unit 140c may include an inertial measurement unit (IMU) sensor, a collision sensor, a wheel sensor, a speed sensor, a slope sensor, a weight sensor, a heading sensor, a position module, a vehicle forward/backward sensor, a battery sensor, a fuel sensor, a tire sensor, a steering sensor, a temperature sensor, a humidity sensor, an ultrasonic sensor, an illumination sensor, a pedal position sensor, and so on. The autonomous driving unit 140d may implement technology for maintaining a lane on which the vehicle is driving, technology for automatically adjusting speed, such as adaptive cruise control, technology for autonomously driving along a determined path, technology for driving by automatically setting a route if a destination is set, and the like.

For example, the communication unit 110 may receive map data, traffic information data, and so on from an external server. The autonomous driving unit 140d may generate an autonomous driving route and a driving plan from the obtained data. The control unit 120 may control the driving unit 140a such that the vehicle or autonomous driving vehicle 100 may move along the autonomous driving route according to the driving plan (e.g., speed/direction control). During autonomous driving, the communication unit 110 may aperiodically/periodically acquire recent traffic information data from the external server and acquire surrounding traffic information data from neighboring vehicles. During autonomous driving, the sensor unit 140c may obtain information about a vehicle state and/or surrounding environment information. The autonomous driving unit 140d may update the autonomous driving route and the driving plan based on the newly obtained data/information. The communication unit 110 may transfer information about a vehicle position, the autonomous driving route, and/or the driving plan to the external server. The external server may predict traffic information data using AI technology based on the information collected from vehicles or autonomous driving vehicles and provide the predicted traffic information data to the vehicles or the autonomous driving vehicles.

Those skilled in the art will appreciate that the present disclosure may be carried out in other specific ways than those set forth herein without departing from the spirit and essential characteristics of the present disclosure. The above embodiments are therefore to be construed in all aspects as illustrative and not restrictive. The scope of the disclosure should be determined by the appended claims and their legal equivalents, not by the above description, and all changes coming within the meaning and equivalency range of the appended claims are intended to be embraced therein.

### INDUSTRIAL APPLICABILITY

As described above, the present disclosure is applicable to various wireless communication systems.

## Claims

1. A method of transmitting and receiving a signal by a user equipment (UE) in a wireless communication system, the method comprising:
receiving information on a demodulation-reference signal (DM-RS) port in relation to reception of a physical downlink shared channel (PDSCH); and
receiving the PDSCH and the DM-RS based on the information,
wherein based on that (i) radio resource control (RRC) signaling for deactivating a frequency domain orthogonal cover code (OCC) for the DM-RS port is received, and (ii) a modulation and coding scheme (MCS) for the PDSCH is greater than or equal to a threshold, an orthogonal DM-RS port belonging to the same code division multiplexing (CDM) group as the DM-RS port is not related with any other UE other than the UE.

2. The method of claim 1, wherein the orthogonal DM-RS port is not assigned to the other UE.

3. The method of claim 1, wherein the RRC signaling is received based on that a subcarrier spacing (SCS) of 480 kHz or an SCS of 960 kHz is used for the PDSCH.

4. The method of claim 1, wherein the RRC signaling is received based on a type of the DM-RS is a type 1 or a type 2.

5. The method of claim 1, wherein the RRC signaling is received based on that a transmission rank of the PDSCH is 1.

6. The method of claim 1, wherein the threshold is received via the RRC signaling.

7. The method of claim 6, wherein the RRC signaling includes (i) a first parameter for deactivating frequency domain OCC for the DM-RS port and (ii) a second parameter for a threshold of an MCS for the PDSCH.

8. The method of claim 1, wherein the RRC signaling includes a first parameter for deactivating frequency domain OCC for the DM-RS port, and
based on that the RRC signaling does not include a second parameter for a threshold of an MCS for the PDSCH, a predefined default value is used as the threshold.

9. The method of claim 8, wherein the default value is defined based on an SCS value for the PDSCH.

10. The method of claim 1, wherein the threshold is an MCS value corresponding to a 64-quadrature amplitude modulation (64-QAM).

11. A user equipment (UE) for transmitting and receiving a signal in a wireless communication system, the UE comprising:
at least one transceiver;
at least one processor; and
at least one memory operatively connected to the at least one processor and configured to store instructions that when executed causes the at least one processor to perform a specific operation,
wherein the specific operation includes:
receiving information on a demodulation-reference signal (DM-RS) port in relation to reception of a physical downlink shared channel (PDSCH); and
receiving the PDSCH and the DM-RS based on the information,
wherein based on that (i) radio resource control (RRC) signaling for deactivating a frequency domain orthogonal cover code (OCC) for the DM-RS port is received, and (ii) a modulation and coding scheme (MCS) for the PDSCH is greater than or equal to a threshold, an orthogonal DM-RS port belonging to the same code division multiplexing (CDM) group as the DM-RS port is not related with any other UE other than the UE.

12. An apparatus for a user equipment (UE), the apparatus comprising:
at least one processor; and
at least one memory operatively connected to the at least one processor and configured to when executed causes the at least one processor to perform an operation including:
receiving information on a demodulation-reference signal (DM-RS) port in relation to reception of a physical downlink shared channel (PDSCH); and
receiving the PDSCH and the DM-RS based on the information,
wherein based on that (i) radio resource control (RRC) signaling for deactivating a frequency domain orthogonal cover code (OCC) for the DM-RS port is received, and (ii) a modulation and coding scheme (MCS) for the PDSCH is greater than or equal to a threshold, an orthogonal DM-RS port belonging to the same code division multiplexing (CDM) group as the DM-RS port is not related with any other UE other than the UE.

13. A non-volatile computer-readable storage medium including at least one computer program to cause at least one processor to perform an operation comprising:
receiving information on a demodulation-reference signal (DM-RS) port in relation to reception of a physical downlink shared channel (PDSCH); and
receiving the PDSCH and the DM-RS based on the information,
wherein based on that (i) radio resource control (RRC) signaling for deactivating a frequency domain orthogonal cover code (OCC) for the DM-RS port is received, and (ii) a modulation and coding scheme (MCS) for the PDSCH is greater than or equal to a threshold, an orthogonal DM-RS port belonging to the same code division multiplexing (CDM) group as the DM-RS port is not related with any other UE other than the UE.
